# EUROPÄISCHE PATENTSCHRIFT

(11) **EP 3 680 992 B1**
(45) Veröffentlichungstag und Bekanntmachung des Hinweises auf die Patenterteilung: **17.07.2024**
(21) Anmeldenummer: 20159966.9
(22) Anmeldetag: 01.02.2016
(51) Int. Cl.: H01R 13/639, H01R 24/38, B60L 53/16, H01R 105/00, H01R 24/58

(54) **STECKVERBINDUNG UND VERFAHREN ZUM VERBINDEN VON INSBESONDERE ELEKTRISCHEN LEITUNGEN**
PLUG CONNECTION AND METHOD FOR CONNECTING IN PARTICULAR ELECTRICAL LINES
CONNECTEUR ENFICHABLE ET PROCÉDÉ DE CONNEXION, EN PARTICULIER DE LIGNES ÉLECTRIQUES

(30) Priorität: 30.01.2015 AT 500772015
(43) Veröffentlichungstag der Anmeldung: 15.07.2020
(62) Teilanmeldung aus: 16705714.0
(73) Patentinhaber: Flechl, Christian, 8010 Graz (AT)
(72) Erfinder: Flechl, Christian, 8010 Graz (AT)
(74) Vertreter: Wirnsberger & Lerchbaum Patentanwälte OG

(56) Entgegenhaltungen:
- EP-A1- 2 533 374
- WO-A1-2014/096144
- CN-A- 102 035 093
- CN-A- 105 281 165
- DE-C2- 3 722 196
- KR-A- 20110 077 444

## Beschreibung

Die Erfindung betrifft eine Steckverbindung zum Verbinden von insbesondere elektrischen Leitungen, umfassend zumindest ein weibliches Verbindungselement und ein männliches Verbindungselement, wobei das weibliche Verbindungselement das männliche Verbindungselement formschlüssig aufnimmt und wobei die beiden Verbindungselemente bei formschlüssigem Kontakt kraftschlüssig lösbar verbindbar sind.

Darüber hinaus betrifft die Erfindung eine Verwendung einer solchen Steckverbindung. Weiter betrifft die Erfindung ein Verfahren zum Verbinden von insbesondere elektrischen Leitungen mit einer Steckverbindung, wobei zumindest ein männliches Verbindungselement von zumindest einem weiblichen Verbindungselement formschlüssig aufgenommen wird und die Verbindungselemente bei formschlüssigem Kontakt kraftschlüssig lösbar verbunden werden.

Aus dem Stand der Technik sind eine Reihe von Steckverbindungen zum Verbinden und Trennen von insbesondere elektrischen Leitungen bekannt. Allen Steckverbindungen ist gemeinsam, dass diese ein männliches Verbindungselement und ein weibliches Verbindungselement umfassen.

WO 2014/096144 A1 offenbart ebenfalls eine Steckverbindung.

Bei einer aus dem Stand der Technik bekannten Steckverbindung sind am männlichen Verbindungselement nach außen weisende Kontaktstifte vorgesehen. Um eine gewünschte Stabilität dieser Kontaktstifte zu gewährleisten, sind diese meistens dick bzw. mit jeweils einem relativ großen Durchmesser ausgebildet. Das weibliche Verbindungselement einer solchen Steckverbindung umfasst Kontaktöffnungen, welche die Kontaktstifte formschlüssig aufnehmen. Beim Zusammenführen der Verbindungselemente der Steckverbindung müssen diese genau positioniert werden, sodass das männlichen Verbindungselement bzw. dessen Kontaktstifte in das weibliche Verbindungselement bzw. dessen Kontaktöffnungen steckbar sind. Um eine störungsfreie Übertragung von Spannung bzw. eine Haltbarkeit der gesteckten Verbindung zu ermöglichen, wird eine solche Steckverbindung bei formschlüssigem Kontakt kraftschlüssig verbunden, was relativ kraftaufwendig sein kann. Dies ist insbesondere der Fall, wenn schwere Kabel miteinander oder mit einer Buchse verbunden werden sollen, wie beispielsweise beim Laden eines Elektrofahrzeuges.

Aufgabe der Erfindung ist es, eine Steckverbindung der eingangs genannten Art anzugeben, bei welcher das männliche Verbindungselement in einfacher Weise und mit sicherem Halt mit dem weiblichen Verbindungselement verbindbar ist.

Ein weiteres Ziel der Erfindung ist es, eine Verwendung einer solchen Steckverbindung anzugeben.

Weiter ist es Ziel, ein Verfahren der eingangs genannten Art anzugeben, mit welchem ein männliches und ein weibliches Verbindungselement einer Steckverbindung in einfacher Weise und mit sicherem Halt miteinander verbunden werden.

Die Aufgabe wird erfindungsgemäß dadurch gelöst, dass bei einer Steckverbindung der eingangs genannten Art ein in Verbindung tretender Bereich des männlichen Verbindungselementes koaxial zulaufend ausgebildet ist und zumindest einen verschiebbaren Kontaktkörper umfasst, welcher in einer ersten Position innerhalb und in einer zweiten Position aus dem männlichen Verbindungselement vorragend angeordnet ist.

Ein mit der Erfindung erzielter Vorteil ist insbesondere darin zu sehen, dass durch die Ausbildung der Verbindungselemente diese in einer einfachen Weise formschlüssig zusammenführbar sind. Beim Zusammenführen der Verbindungselemente kann dabei vorgesehen sein, dass der Kontaktkörper des männlichen Verbindungselementes in der ersten Position innerhalb desselben angeordnet ist. Dadurch erfolgt das formschlüssige Verbinden der Verbindungselemente in einer einfachen Weise und unabhängig von einer Position, in welcher die beiden Verbindungselemente aufeinandertreffen. Es ist somit kein genaues Positionieren des männlichen Verbindungselementes im weiblichen Verbindungselement notwendig. Ferner ist der zumindest eine Kontaktkörper des männlichen Verbindungselementes dünn ausbildbar bzw. muss dieser keine gewisse Mindestdicke aufweisen, da dieser beim Zusammenführen der beiden Verbindungselemente im männlichen Verbindungselement angeordnet ist und erst nach formschlüssigem Kontakt in eine zweite Position verschiebbar ist, um einen vollen Kontakt herzustellen. Die Verbindungselemente sind bevorzugt formstabil aus einem hierfür geeigneten Material ausgebildet. Der in Verbindung tretende Bereich des männlichen Verbindungselementes kann beispielsweise als Konus bzw. konisch zulaufend, halbkugelförmig oder pyramidenförmig ausgebildet sein. Das weibliche Verbindungselement ist dann so ausgebildet, dass dieses das männliche Verbindungselement formschlüssig aufnimmt.

Dabei kann bevorzugt vorgesehen sein, dass bei formschlüssigem Kontakt der beiden Verbindungselemente der Kontaktkörper des männlichen Verbindungselementes unter Krafteinwirkung formschlüssig mit zumindest einer Kontaktschicht des weiblichen Verbindungselementes verbindbar ist, wobei ein Verbindungsbereich im weiblichen Verbindungselement gelagert ist. Insbesondere kann dabei vorgesehen sein, dass mehrere Kontaktkörper im männlichen Verbindungselement angeordnet sind, welche bevorzugt entsprechend den Kontaktschichten im weiblichen Verbindungselement angeordnet sind, bevorzugt koaxial zueinander. Günstig ist es, wenn die Kontaktkörper stets innerhalb des männlichen Verbindungselementes angeordnet sind und erst nach einer formschlüssigen Aufnahme des männlichen Verbindungselementes vom weiblichen Verbindungselement teilweise aus diesem herausdrückbar bzw. verschiebbar sind, um ein Verbiegen der Kontaktkörper oder dergleichen zu verhindern. Bei einer Position teilweise außerhalb des männlichen Verbindungselementes bzw. einer Position, bei welcher sich eine Form des männlichen Verbindungselementes ändert, sind die Kontaktkörper in Richtung des in Verbindung tretenden Bereiches des männlichen Verbindungselementes jeweils in allen Richtungen von diesem begrenzt, wobei der in Verbindung tretende Bereich bevorzugt aus einem insbesondere elektrisch nicht leitendem Material bzw. Isoliermaterial gefertigt ist. Die Kontaktkörper können also außen bis auf einen für eine Kontaktbildung notwendigen Bereich insbesondere elektrisch isoliert sein.

Vorteilhaft ist es, wenn der Kontaktkörper und die Kontaktschicht der jeweiligen Verbindungselemente in einem Querschnitt durch diese im Wesentlichen rund sind. Dabei kann weiter vorgesehen sein, dass jeder runde bzw. ringförmige Kontaktkörper jeweils aus mehreren, z. B. drei oder sechs, Teilstücken bzw. Segmenten besteht. Durch die ringförmige Ausbildung des zumindest einen Kontaktkörpers kann dieser dünn ausgebildet sein bzw. eine geringe Dicke aufweisen, beispielsweise dünner als 2 mm, insbesondere etwa 1 mm oder weniger, und trotzdem eine große Querschnittsfläche aufweisen, da eine Umfangslänge des Kontaktkörpers um zumindest eine Größenordnung größer ist als dessen Dicke. Durch die große Querschnittsfläche ist z. B. bei einer Übertragung von elektrischer Energie eine große Ladeleistung erreichbar, was eine Ladedauer herabsetzen kann. Laden kann dabei sowohl ein Aufladen als auch ein Entladen einer Speichereinheit umfassen. Die zumindest eine Kontaktschicht des weiblichen Verbindungselementes ist wiederum korrespondierend rund bzw. kreisförmig ausgebildet. Sind mehrere Kontaktkörper bzw. Kontaktschichten vorgesehen, können diese bevorzugt koaxial angeordnet sein, insbesondere um ein Ende des in Verbindung tretenden Bereiches des männlichen Verbindungselementes bzw. koaxial um einen entsprechenden Teil des weiblichen Verbindungselementes.

Es kann mit Vorteil vorgesehen sein, dass eine mehrphasige elektrische Verbindung vorliegt, wobei für jede Phase jeweils ein in einem Querschnitt durch die Verbindungselemente im Wesentlichen runder Kontaktkörperje männlichem Verbindungselement und eine im Wesentlichen runde Kontaktschicht je weiblichem Verbindungselement vorgesehen sind und wobei diese im Querschnitt durch die Verbindungselemente jeweils versetzt zueinander angeordnet sind. Ferner ist es von Vorteil, wenn diese koaxial zueinander angeordnet sind, wobei ein Abstand zwischen jeweils zwei Kontaktkörpern bzw. Kontaktschichten variieren kann. Ist die Steckverbindung zu einer Übertragung von elektrischer Energie ausgebildet, können abhängig davon, ob bei einer Übertragung von Wechselspannung bzw. Wechselstrom bzw. Drehstrom eine dreiphasige oder fünfphasige Verbindung hergestellt werden soll, entsprechend drei oder fünf Kontaktkörper bzw. Kontaktschichten vorgesehen sein. Bei einer Übertragung von Gleichspannung können zwei männliche Verbindungselemente vorgesehen sein, in welchen jeweils ein Kontaktkörper mit jeweils einer Phase angeordnet ist. Dementsprechend können zwei weibliche Verbindungselemente zur Aufnahme der männlichen Verbindungselemente vorgesehen sein und entsprechend jeweils eine Kontaktschicht mit einer Phase umfassen. Bei einer Übertragung von Drehstrom mit drei Leiterphasen, einem Neutralleiter und einem Schutzleiter kann ein Schutzleiterkontakt so ausgebildet sein, dass eine Kontaktierung desselben im weiblichen Verbindungselement vor allen anderen Leiterkontakten erfolgt. Dazu kann der Schutzleiterkontakt z. B. länger ausgebildet sein als die übrigen Leiterkontakte, wodurch dieser auch als letzter Leiterkontakt vom weiblichen Verbindungselement getrennt wird.

Bei einer dreiphasigen Verbindung können auch zusätzlich zu den drei Aussparungen mit jeweils einem Kontaktkörper bzw. einer Kontaktschicht pro Verbindungselement zwei weitere Aussparungen für einen Schutzleiter und einen Neutralleiter und zusätzlich eine bzw. zwei weitere Aussparungen vorgesehen sein. In diesen sind zweckmäßigerweise Signalleitungen bzw. Signalkontakte für eine Kommunikation zwischen beispielsweise einem Elektrofahrzeug und einer Ladestation angeordnet. Besonders günstig ist es, wenn nur eine zusätzliche Aussparung für z. B. zwei Signalkontakte vorgesehen ist, welche weiter unterteilt ist bzw. in welcher zwei Signalkontakte z. B. übereinander mit einer Isolierung dazwischen angeordnet sind, um die zwei Signalkontakte voneinander abzutrennen. Beim Zusammenschluss der beiden Verbindungselemente sind die Signalkontakte konduktiv miteinander verbunden. Über die Signalkontakte wird wenig bis annährend keine Energie übertragen, weshalb diese entsprechend dünn bzw. dünner als die Kontaktkörper bzw. Kontaktschichten zur Strom- bzw. Spannungsübertragung ausgebildet sind.

Es kann vorgesehen sein, dass mehrere weibliche Verbindungselemente als Kontaktierungsplatte an einem Elektrofahrzeug angeordnet sind. Dabei ist es notwendig, die Signalleitungen bzw. Signalkontakte am Ladeanschluss des Elektrofahrzeuges zu unterbrechen, sobald die Kontaktkörper bzw. Kontaktschichten zur Strom- bzw. Spannungsübertragung verbunden sind, um ein gleichzeitiges Laden des Elektrofahrzeuges über dessen Ladeanschluss und die Kontaktierungsplatte zu vermeiden. Erfolgt dies nicht, kann es beim Ladevorgang des Elektrofahrzeuges zu einem Kurzschluss kommen.

Eine weitere Variante ist durch eine einphasige Energieübertragung bzw. Verbindung gekennzeichnet. Bei einer einphasigen Verbindung sind im weiblichen Verbindungselement koaxiale Aussparungen für einen Außenleiter sowie einen Neutralleiter und Schutzleiter angeordnet. Darüber hinaus sind zusätzlich eine bzw. zwei weitere Aussparungen für Signalleitungen vorgesehen. Hierbei ist es jedoch zweckmäßig, wenn das bei einer Verbindung der beiden Verbindungselemente hergestellte Drehstromnetz nicht unsymmetrisch belastet wird, da über dieses in einem solchen Fall nur eine bestimmte Leistung übertragen werden darf. Bei einem solchen einphasigen Aufbau sind die Kontaktkörper bzw. Kontaktschichten der Verbindungselemente mit Vorteil groß bzw. mit einem großen Volumen dimensioniert, sodass große bzw. hohe Ströme fließen können bzw. übertragbar sind. Des Weiteren sind die zwei stromführenden Kontakte bei einer Gleichstromladung als Plus- bzw. Minuspol verwendbar.

Besonders vorteilhaft ist es, wenn die Verbindungselemente jeweils an einer zusammenführbaren Seite konusförmig ausgebildet sind, wobei ein in Verbindung tretender Bereich des männlichen Verbindungselementes so ausgebildet ist, dass dieser bei einem Zusammenführen mit dem weiblichen Verbindungselement selbsttätig in dieses einrastet. Dazu kann vorgesehen sein, dass der in Verbindung tretende Bereich bzw. ein Positionierkonus des männlichen Elementes zulaufend ausgebildet ist und das weibliche Verbindungselement konusförmig auseinanderläuft. Diese Ausbildung der Verbindungselemente und die Positionierung des zumindest einen Kontaktkörpers innerhalb des männlichen Verbindungselementes erlaubt ein Zusammenführen der beiden Verbindungselemente unabhängig von deren Position zueinander. Eine Verdrehung der Verbindungselemente um deren Längsachse bzw. z-Achse spielt keine Rolle. Darüber hinaus verhindert auch ein Verkippen eines der Verbindungselemente ein formschlüssiges Zusammenführen nicht, da das männliche Verbindungselement mit Vorteil so ausgebildet ist, dass dieses in das weibliche Verbindungselement rutscht. Die beiden Verbindungselemente sind beispielsweise händisch zusammenführbar. Alternativ können eines oder beide Verbindungselemente an einer Einrichtung angeordnet sein, welche diese zusammenführt. Um eine endgültige Position im weiblichen Verbindungselement einzunehmen, kann es zweckmäßig sein, wenn das männliche Verbindungselement um eine oder zwei Achsen auslenkbar ist. Werden die Verbindungselemente händisch zusammengeführt, so führt eine Hand eine solche Auslenkung durch. Liegt eine Einrichtung zum Zusammenführen der Verbindungselemente vor, so kann das männliche Verbindungselement in einer oder mehreren Achsen auslenkbar an dieser angeordnet sein. Alternativ kann auch das weibliche Verbindungselement auslenkbar sein.

Günstig ist es, wenn eine Höhe des konusförmigen Bereiches des männlichen Verbindungselementes einer Tiefe der konusförmigen Ausnehmung des weiblichen Verbindungselementes entspricht. Das männliche Verbindungselement ist weiter bevorzugt mit einer Auflagefläche ausgebildet, welche an der Grundfläche des Konus angeordnet ist und sich diese verlängernd nach außen erstreckt. Aufgrund der Auflagefläche nimmt das männliche Verbindungselement auch bei einem etwas schiefen Zusammenführen desselben mit dem weiblichen Verbindungselement eine formschlüssige Position in diesem ein, da das männliche Verbindungselement aufgrund der Auflagefläche automatisch gerade gedrückt wird.

Insbesondere kann es dazu günstig sein, dass ein Ende des in Verbindung tretenden Bereiches des männlichen Verbindungselementes stumpf ausgebildet ist. Dadurch ist sichergestellt, dass das männliche Verbindungselement formschlüssig im weiblichen Verbindungselement positionierbar ist. Die stumpfe Spitze ermöglicht dabei ein selbsttätiges sowie nachgiebiges Einrasten des männlichen Verbindungselementes in das weibliche Verbindungselement. Es muss durch eine solche Ausbildung kein großer Widerstand überwunden werden. Insbesondere bei einem ungenauen Auftreffen des männlichen Verbindungselementes auf dem weiblichen Verbindungselement ist durch die Ausformung des männlichen Verbindungselementes bzw. dessen in Verbindung tretenden Bereiches ein automatisiertes Einrasten in das weibliche Verbindungselement ermöglicht. Besonders bevorzugt weist das Ende des männlichen Verbindungselementes eine halbkugelförmige Abrundung mit einem Radius kleiner als 5 mm, insbesondere 1 mm oder kleiner auf. Bei einer Materialwahl des männlichen Verbindungselementes sollte insbesondere darauf geachtet werden, dass dieses eine erforderliche Härte aufweist, um einen möglichen Materialabrieb beim Zusammenführen zu minimieren. Dazu kann eine Oberfläche des Verbindungselementes beschichtet sein, z. B. mit Polytetrafluorethylen (PTFE), wobei es dabei günstig ist, wenn auch eine Oberfläche der Positionierelemente mit PTFE beschichtet ist, um einen Reibwert beim Zusammenführen zu minimieren.

Erfindungsgemäß kann weiter vorgesehen sein, dass der in Verbindung tretende Bereich des männlichen Verbindungselementes als Konus bzw. Kegel ausgebildet ist und einen Winkel bzw. eine konusförmige Reduzierung im Bereich von 50° bis 80° aufweist, insbesondere im Bereich von 55° bis 75°, bevorzugt etwa 65°. Dadurch rutscht dieser beim Zusammenführen bzw. Anstehen am weiblichen Verbindungselement besonders gut in dieses und es ist wenig Reibungswiderstand zu überwinden.

Von Vorteil ist es weiter, wenn das weibliche Verbindungselement in einer mehreckigen, insbesondere in einer hexagonalen, Zelle angeordnet ist. Dazu kann weiter vorgesehen sein, dass die Zelle eine insbesondere konusförmige Ausnehmung mit einer Spitze in einem Mittelpunkt der Zelle aufweist. Es kann dabei ein Durchmesser der Zelle mit etwa 40 mm bis 120 mm, beispielsweise 70 mm, vorliegen. Die Ausnehmung umfasst dabei bevorzugt eine gesamte Höhe bzw. Dicke des weiblichen Verbindungselementes, welches beispielsweise 10 mm bis 30 mm hoch bzw. dick sein kann. Ein Winkel der Ausnehmung kann im Bereich von 15° bis 35° groß sein, insbesondere im Bereich von 20° bis 30°, bevorzugt etwa 25°. Durch diese Ausbildung ist es möglich, mehrere weibliche Verbindungselemente platzsparend nebeneinander anzuordnen, beispielsweise auf einer Platte, welche in hexagonale Zellen unterteilt ist. Auch eine Anordnung in einer Reihe ist möglich.

Zweckmäßig ist es, wenn zur kraftschlüssigen Verbindung der Verbindungselemente eine Feder vorgesehen ist, um die kraftschlüssige Verbindung in einer einfachen Weise herzustellen und wieder zu lösen. Es kann dabei beispielsweise vorgesehen sein, dass die Feder im männlichen Verbindungselement angeordnet ist und diese an einer dem Ende des Positionierkonus gegenüberliegenden Seite des männlichen Verbindungselementes angeordnet ist. Alternativ zur Feder kann auch ein anderes Mittel zur Herstellung einer kraftschlüssigen Verbindung vorgesehen sein, beispielsweise eine Klemme oder eine Schraube. Die Feder erlaubt eine einfache Herstellung einer kraftschlüssigen Verbindung mit geringem Kraftaufwand.

Zweckmäßig ist es ferner, wenn an einer der Spitze bzw. dem Ende des Positionierkonus gegenüberliegenden Seite ein Druckmittel zur Betätigung der Feder vorgesehen ist, mit welchem die Kontaktkörper durch Krafteinwirkung aus dem Positionierkonus des männlichen Verbindungselementes bringbar sind, wobei die Kontaktkörper bevorzugt in dieser Position außerhalb des männlichen Verbindungsmittels lösbar fixierbar sind. Dazu können im männlichen Verbindungselement bzw. dessen in Verbindung tretenden Bereiches Ausnehmungen vorgesehen sein. Ferner ist eine Ausbildung möglich, wobei die Kontaktkörper durch eine neuerliche Betätigung des Druckmittels aus dieser Position lösbar und wieder in deren Ausgangsposition innerhalb des männlichen Verbindungsmittels bringbar sind.

Erfindungsgemäß kann weiter vorgesehen sein, dass in einem ersten Schritt die formschlüssige Verbindung zwischen dem männlichen Verbindungselement und dem weiblichen Verbindungselement erfolgt, wonach die beiden Verbindungselemente bevorzugt gleichzeitig mit einer Herstellung eines Kontakts zwischen der zumindest einen Kontaktschicht und dem zumindest einen Kontaktkörper kraftschlüssig lösbar verbindbar sind. Erst nach Abschluss dieser Schritte kann eine Übertragung von z. B. elektrischer Energie, Daten, Schall oder Licht erfolgen. Dazu kann beispielsweise mindestens ein Magnet vorhanden sein, welcher dafür sorgt, dass sich der Positionierkonus des männlichen Verbindungselementes am bzw. im weiblichen Verbindungselement so ausrichtet, dass die Kontaktkörper nicht vorzeitigt aus dem männlichen Verbindungselement geschoben werden und somit einer Ausrichtung des Positionierkonuses im Weg stehen würden.

Ferner kann ein erster mechanischer Taster bzw. Sensor vorgesehen sein, welcher feststellt, ob die Kontaktkörper vollständig aus dem männlichen Verbindungselement geschoben wurden. Darüber hinaus kann ein zweiter Taster bzw. Sensor vorhanden sein, welcher z. B. außen am Positionierkonus des männlichen Verbindungselementes angeordnet sein kann und bei Kontakt mit dem weiblichen Verbindungselement betätigt wird. Beide Sensoren bzw. Taster können bevorzugt mit einer Und-Verknüpfung miteinander verbunden sein, wodurch beide betätigt sein müssen, um z. B. einen Stromfluss überhaupt zu ermöglichen. Weiter ermöglichen diese Sensoren auch eine sofortige Unterbrechung des Stromflusses wenn die Verbindungselemente voneinander getrennt werden.

Vorteilhaft ist es, wenn in jedem Verbindungselement mehrere Kontaktkörper und/oder Kontaktschichten vorgesehen sind, welche jeweils abwechselnd mit Isolierschichten angeordnet sind, wobei bei formschlüssigem Kontakt die Isolierschichten beider Verbindungselemente aufeinander aufliegen. Somit ist bei formschlüssigem Kontakt noch keine leitende Verbindung hergestellt und unerwünschte elektrische Überschläge bzw. Kontakte werden vermieden. Falls eine dreiphasige Verbindung zur Übertragung von Wechselspannung zwischen dem weiblichen Verbindungselement und dem männlichen Verbindungselement hergestellt werden soll, kann vorteilhaft vorgesehen sein, dass im weiblichen Verbindungselement drei Kontaktschichten ringförmig bzw. koaxial angeordnet sind. Durch die ringförmige Ausbildung der Kontaktschichten und Kontaktkörper können diese dünn ausgebildet sein, beispielsweise dünner als 2 mm, insbesondere etwa 1 mm oder weniger, und trotzdem eine große Querschnittsfläche aufweisen, da eine Umfangslänge der Kontaktschicht bzw. Kontaktkörper um zumindest eine Größenordnung größer ist als dessen Dicke.

Zweckmäßig ist es, wenn in einem Querschnitt durch das weibliche Verbindungselement in diesem zumindest eine im Wesentlichen runde Aussparung vorgesehen ist, in welcher die zumindest eine Kontaktschicht desselben angeordnet ist. Es können mehrere hohlzylindrische, koaxiale Aussparungen vorgesehen sein. Erfindungsgemäß können beispielsweise eine, drei oder fünf Aussparungen vorgesehen sein. Sind mehrere Aussparungen vorgesehen, ist es von Vorteil, wenn diese relativ betrachtet etwa gleich tief ausgebildet sind, wobei eine Aussparung, welche am weitesten innen bzw. am nächsten zur Spitze der konusförmigen Ausnehmung angeordnet ist, am weitesten in Richtung eines unteren Endes des weiblichen Verbindungselementes reicht.

Vorteilhaft kann vorgesehen sein, dass Kontaktschichten in einen Querschnitt durch das weibliche Verbindungselement beabstandet von einem oberen Ende desselben angeordnet sind. Dieser Querschnitt entspricht dabei einem Schnitt quer zu einem Ring der Kontaktschichten. Dadurch ist wiederum sichergestellt, dass eine leitende Verbindung erst nach einer erfolgten formschlüssigen Verbindung der Verbindungselemente erfolgt. Die Isolierschichten hingegen reichen bis zu einem oberen Ende des Verbindungselementes bzw. bilden diese das obere Ende.

Mit Vorteil können ein oder mehrere weibliche Verbindungselemente an einem Elektrofahrzeug angeordnet sein. Das weibliche Verbindungselement bzw. die erfindungsgemäße Steckverbindung erlaubt dadurch ein einfaches Verbinden eines Kabels mit einer an einem Elektrofahrzeug angeordneten Buchse und erleichtert somit ein Laden eines Elektrofahrzeuges. Beim Zusammenführen des männlichen Verbindungselementes mit dem weiblichen Verbindungselement ist dadurch im Vergleich zum Stand der Technik weniger Kraft notwendig.

Eine Verwendung einer erfindungsgemäßen Steckverbindung erfolgt mit Vorteil beim Verbinden von Stromleitungen, insbesondere beim Laden eines Elektrofahrzeuges.

Das verfahrensmäßige Ziel wird erreicht, wenn bei einem Verfahren der eingangs genannten Art ein koaxial zulaufender Bereich des männlichen Verbindungselementes mit dem weiblichen Verbindungselement verbunden wird, wonach zumindest ein Kontaktkörper des männlichen Verbindungselementes aus einer Position innerhalb desselben gelöst und in eine aus dem männlichen Verbindungselement vorragende Position geschoben wird, um den Kontaktkörper des männlichen Verbindungselementes mit zumindest einer Kontaktschicht des weiblichen Verbindungselementes zu verbinden.

Ein Vorteil des erfindungsgemäßen Verfahrens ist insbesondere darin zu sehen, dass durch die Herstellung einer leitenden Verbindung in mehreren Schritten ein einfaches Verbinden des männlichen Verbindungselementes mit dem weiblichen Verbindungselement erreicht wird. Dabei sind die Verbindungselemente mit Vorteil so ausgebildet, dass diese in einer beliebigen Weise formschlüssig zusammengeführt werden können, z. B. können diese konisch ausgebildete Bereiche umfassen. Der Kontaktkörper des männlichen Verbindungselementes wird dabei erst nach einer formschlüssigen Verbindung der Verbindungselemente aus diesen herausgeschoben, wodurch einerseits eine Herstellung einer ungewollten leitenden Verbindung zwischen den Verbindungselementen und andererseits unerwünschte mechanische Beanspruchungen des Kontaktkörpers vermieden wird.

Die beiden Verbindungselemente können beispielsweise händisch zusammengeführt werden. Alternativ können eines oder beide Verbindungselemente an einer Einrichtung angeordnet sein, welche diese zusammenführt. Um eine endgültige Position im weiblichen Verbindungselement einzunehmen, kann es zweckmäßig sein, wenn das männliche Verbindungselement um eine oder zwei Achsen ausgelenkt wird. Werden die Verbindungselemente händisch zusammengeführt, so wird eine solche Auslenkung von einer Hand durchgeführt. Liegt eine Einrichtung zum Zusammenführen der Verbindungselemente vor, so kann das männliche Verbindungselement in einer oder mehreren Achsen auslenkbar an dieser angeordnet werden. Alternativ kann auch das weibliche Verbindungselement ausgelenkt werden.

Zweckmäßig ist es dabei, wenn bei einer formschlüssigen Verbindung des zumindest einen Kontaktkörpers mit der zumindest einen Kontaktschicht in einem Kontaktbereich innerhalb des weiblichen Verbindungselementes die beiden Verbindungselemente insbesondere mit einer Feder selbsttätig kraftschlüssig lösbar verbunden werden. Insbesondere kann dabei vorgesehen sein, dass die Verbindung der Kontaktkörper gleichzeitig mit einer kraftschlüssigen Verbindung der Verbindungselemente hergestellt wird. Der zumindest eine Kontaktkörper ist also außer bei einer Herstellung einer leitenden Verbindung immer innerhalb des männlichen Verbindungselementes angeordnet. Gleichzeitig mit der Herstellung einer leitenden Verbindung werden die beiden Elemente auch kraftschlüssig miteinander verbunden, um ein unterbrechungsfreies Übertragen von beispielsweise elektrischer Energie oder Daten zu ermöglichen. Bei einer Herstellung von beispielsweise einer dreiphasigen elektrischen Verbindung werden drei Kontaktkörper unter Kraftaufwendung mit drei Kontaktschichten des weiblichen Verbindungselementes leitend verbunden.

Von Vorteil ist es, wenn zumindest ein in einem Querschnitt durch das männliche Verbindungselement im Wesentlichen rund ausgebildeter Kontaktkörper desselben in zumindest eine in einem Querschnitt durch das weibliche Verbindungselement im Wesentlichen rund ausgebildete Aussparung desselben geschoben wird, um den Kontaktkörper mit der in der Aussparung angeordneten Kontaktschicht des weiblichen Verbindungselementes zu verbinden. Bevorzugt wird dies erst nach einer formschlüssigen Verbindung der beiden Verbindungselemente durchgeführt, wodurch ein unerwünschter Kontakt und ein Verbiegen der Kontaktkörper vermieden wird. Günstig ist es dabei, wenn mehrere koaxial angeordnete Kontaktkörper vorgesehen sind, welche zur Herstellung einer leitenden Verbindung in ebenso koaxial ausgebildete Aussparungen des weiblichen Verbindungselementes gedrückt werden. Die Kontaktkörper des männlichen Verbindungselementes können jeweils in mehrere Teilstücke bzw. Segmente, beispielsweise in drei oder sechs, aufgeteilt sein. In den Aussparungen des weiblichen Verbindungselementes ist dabei jeweils eine Kontaktschicht gelagert, in deren Richtung die Kontaktkörper geschoben werden.

Günstig ist es dabei, wenn die Verbindungselemente durch Ausübung eines Druckes auf einer Oberseite des männlichen Verbindungselementes kraftschlüssig verbunden werden, um eine Fixierung des männlichen Verbindungselementes im weiblichen Verbindungselement mit einer einfachen Bewegung zu erreichen. Dazu kann beispielsweise eine Feder vorgesehen sein. Vorteilhaft ist weiter, wenn eine aufzuwendende Kraft gering gehalten werden kann.

Mit Vorteil kann vorgesehen sein, dass nach der formschlüssigen Verbindung des zumindest einen Kontaktkörpers mit der zumindest einen Kontaktschicht und der kraftschlüssigen Verbindung der Verbindungselemente elektrische Energie übertragen wird. Dabei können mehrere Kontaktkörper und Kontaktschichten vorgesehen sein, welche durch die ringförmige bzw. kreisförmige Ausbildung derselben dünn ausgebildet sein können und trotzdem eine große Querschnittsfläche aufweisen, wodurch ein Ladezyklus eines Verbrauchers mit einer hohen Ladeleistung durchgeführt wird.

Dabei kann weiter vorgesehen sein, dass nach einem Abschluss der Übertragung von elektrischer Energie die kraftschlüssige Verbindung bevorzugt selbsttätig gelöst wird. Dies ist insbesondere beim Laden einer Speichereinheit für elektrische Energie in einem Elektrofahrzeug von Bedeutung, um einen Komfort dabei zu erhöhen bzw. ein menschliches Mitwirken zu minimieren.

Weitere Merkmale, Vorteile und Wirkungen ergeben sich aus dem nachfolgend dargestellten Ausführungsbeispiel. In den Zeichnungen, auf welche dabei Bezug genommen wird, zeigen:
Fig. 1 ein Schnitt durch eine erfindungsgemäße Steckverbindung;
Fig. 2 eine weitere Ansicht eines Schnittes durch eine erfindungsgemäße Steckverbindung;
Fig. 3 einen Schnitt durch eine erfindungsgemäße Steckverbindung mit verbundenen Kontaktkörpern;
Fig. 4 eine weitere Ansicht eines Schnittes durch eine erfindungsgemäße Steckverbindung mit verbundenen Kontaktkörpern;
Fig. 5a eine Ansicht eines männlichen Verbindungselementes;
Fig. 5b eine weitere Ansicht eines männlichen Verbindungselementes;
Fig. 5c einen Schnitt durch ein männliches Verbindungselement gemäß Fig. 5a;
Fig. 6a eine Ansicht eines männlichen Verbindungselementes mit verschobenen Kontaktkörpern;
Fig. 6b eine weitere Ansicht eines männlichen Verbindungselementes mit verschobenen Kontaktkörpern;
Fig. 6c einen Schnitt durch ein männliches Verbindungselement gemäß Fig. 6a;
Fig. 7a einen leitenden Teil eines männlichen Verbindungselementes;
Fig. 7b eine weitere Ansicht eines leitenden Teiles eines männlichen Verbindungselementes;
Fig. 7c eine weitere Ansicht eines leitenden Teiles eines männlichen Verbindungselementes;
Fig. 8 eine Untersicht eines Schnittes durch ein männliches Verbindungselement.

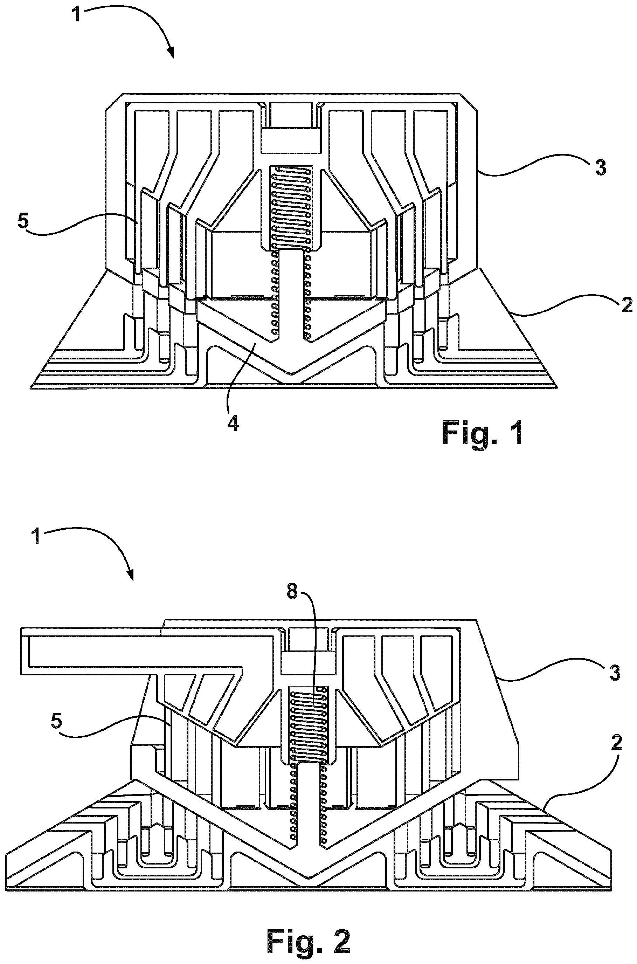

Fig. 1 und 2 zeigen jeweils einen Schnitt durch eine erfindungsgemäße Steckverbindung 1, welche ein weibliches Verbindungselement 2 und ein männliches Verbindungselement 3 umfasst. Das männliche Verbindungselement 3 ist dabei formschlüssig vom weiblichen Verbindungselement 2 aufgenommen, wobei ein in Verbindung tretender Bereich 4 des männlichen Verbindungselementes 3 koaxial zulaufend bzw. konusförmig ausgebildet ist. Weiter umfasst das männliche Verbindungselement 3 gemäß Fig. 1 und 2 drei Kontaktkörper 5, welche ringförmig im männlichen Verbindungselement 3 versetzt zueinander und koaxial angeordnet sind. Weiter sind im weiblichen Verbindungselement 2 drei Kontaktschichten 6 vorgesehen, welche ebenfalls ringförmig und koaxial ausgebildet sind. Diese sind bevorzugt in Aussparungen 10 beabstandet von einem oberen Ende derselben angeordnet.

In Fig. 1 und 2 ist weiter gezeigt, dass das weibliche Verbindungselement 2 schichtweise aufgebaut ist. Dazu kann bevorzugt vorgesehen sein, dass die Kontaktschichten 6 jeweils abwechselnd mit einer Isolierschicht 9 angeordnet sind. Bei drei Kontaktschichten 6 sind vier Isolierschichten 9 vorgesehen, welche das weibliche Verbindungselement 2 nach unten und nach oben abschließen. Die Isolierschichten 9 sind dabei aus einem elektrisch nicht leitenden Material gefertigt, beispielsweise Kunststoff. In Fig. 1 und 2 ist keine leitende Verbindung zwischen den Kontaktkörpern 5 und den Kontaktschichten 6 hergestellt.

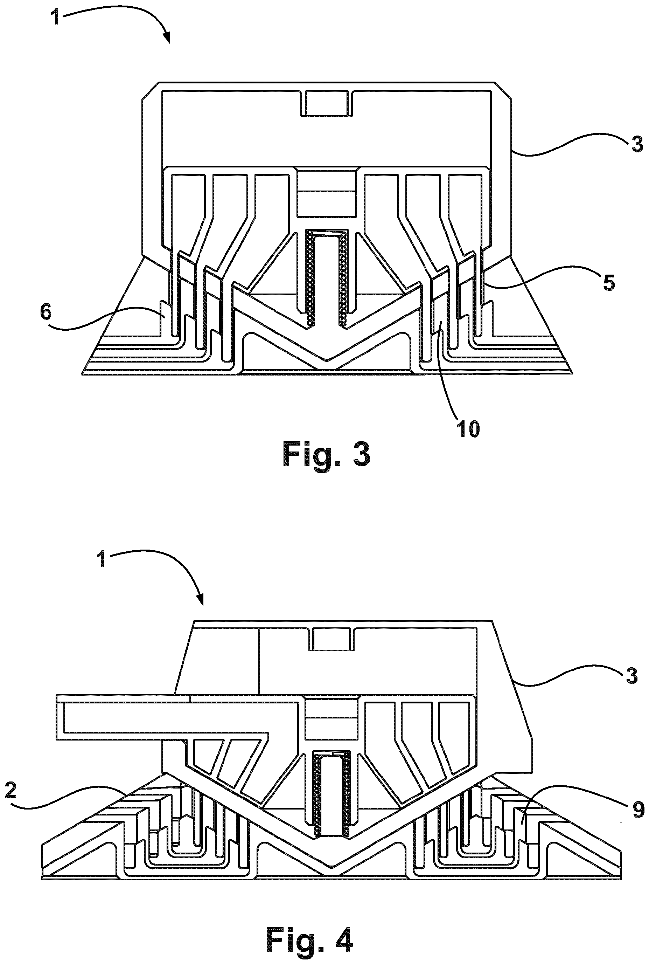

Fig. 3 und 4 zeigen jeweils einen Schnitt durch eine erfindungsgemäße Steckverbindung 1, bei welcher eine leitende Verbindung zwischen dem weiblichen Verbindungselement 2 und dem männlichen Verbindungselement 3 hergestellt ist. Dazu sind die Kontaktkörper 5 verschiebbar im männlichen Verbindungselement 3 gelagert und werden bei formschlüssigem Kontakt der Verbindungselemente 2, 3 in eine aus dem männlichen Verbindungselement 3 vorragende Position geschoben, wobei diese dadurch mit den im weiblichen Verbindungselement 2 angeordneten Kontaktschichten 6 in Verbindung treten, um eine leitende Verbindung herzustellen und in weiterer Folge beispielsweise Spannung zu übertragen. Es kann jedoch auch eine Steckverbindung 1 zur Übertragung von Daten oder Licht vorgesehen sein.

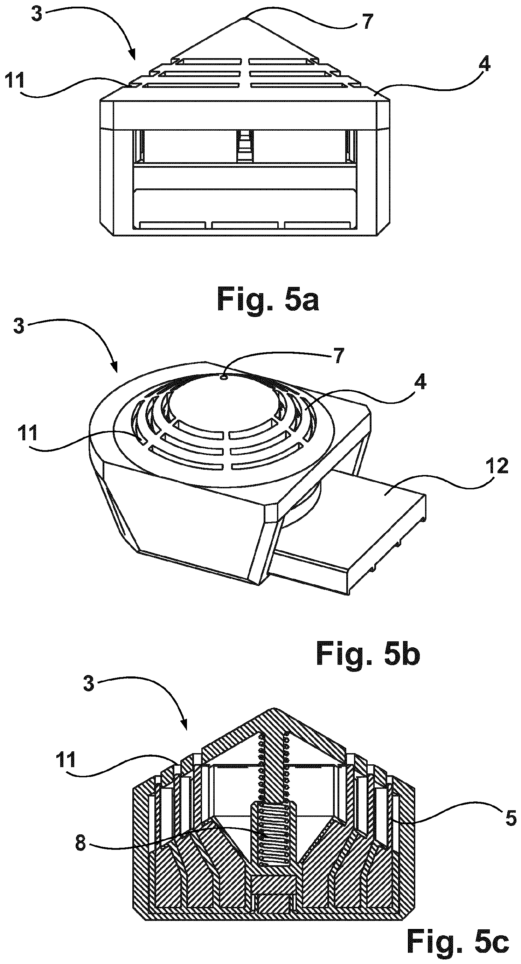

In Fig. 5a bis 5c ist jeweils ein männliches Verbindungselement 3 bzw. ein Schnitt durch ein männliches Verbindungselement 3 gezeigt. Das männliche Verbindungselement 3 ist mit dem in Verbindung tretenden Bereich 4 bzw. mit einem Positionierkonus ausgebildet, welcher beim Zusammenführen mit dem weiblichen Verbindungselement 2 in dieses geschoben wird. Der in Verbindung tretende Bereich 4 ist dabei bevorzugt aus einem elektrisch nicht leitenden Material mit einer gewissen Festigkeit ausgebildet, um beim Zusammenführen mit dem weiblichen Verbindungselement 2 nicht verbogen zu werden. Es kann mit Vorteil vorgesehen sein, dass der in Verbindung tretende Bereich 4 mit einem stumpfen Ende 7 bzw. einer stumpfen Spitze ausgebildet ist. Durch das stumpfe Ende 7 des in Verbindung tretenden Bereiches 4 ist das männliche Verbindungselement 3 auch dann mit dem weiblichen Verbindungselement 2 zusammenführbar, wenn dieses in einer nicht optimalen Weise auf das weibliche Verbindungselement 2 auftrifft. Trifft das männliche Verbindungselement 3 beispielsweise schräg auf das weibliche Verbindungselement 2, so rutscht dieses aufgrund des stumpfen Endes 7 des in Verbindung tretenden Bereiches 4 bzw. des Positionierkonus in das weibliche Verbindungselement 2 und nimmt schließlich eine formschlüssige Position in der konusförmigen Aussparung 10 desselben ein. Ferner sind im Positionierkonus Ausnehmungen 11 vorgesehen, durch welche die Kontaktkörper 5 in eine zweite Position schiebbar sind.

Im Schnitt durch das männliche Verbindungselement 3 gemäß Fig. 5c ist eine Feder 8 zur Herstellung einer kraftschlüssigen Verbindung der Verbindungselemente 2, 3 bzw. einer leitenden Verbindung zwischen den Kontaktkörpern 5 und den Kontaktschichten 6 vorgesehen. Bei einer Betätigung der Feder 8 werden die Kontaktkörper 5 aus dem in Verbindung tretenden Bereich 4 bzw. dem Positionierkonus geschoben. Alternativ zur Feder 8 kann auch ein anderes Mittel zur Herstellung einer lösbaren kraftschlüssigen Verbindung vorgesehen sein, beispielsweise eine Klemme oder eine Schraube.

Zweckmäßig ist ferner, wenn an einer der Spitze bzw. dem Ende 7 des Positionierkonus gegenüberliegenden Seite ein Druckmittel 12 zur Betätigung der Feder 8 vorgesehen ist, mit welchem die Kontaktkörper 5 durch Krafteinwirkung aus dem in Verbindung tretenden Bereich 4 des männlichen Verbindungselementes 3 bringbar sind, wobei die Kontaktkörper 5 bevorzugt in dieser Position außerhalb des männlichen Verbindungsmittels 3 lösbar fixierbar sind. Dabei kann vorgesehen sein, dass diese durch eine neuerliche Betätigung des Druckmittels 12 aus dieser Position lösbar und wieder in deren Ausgangsposition innerhalb des männlichen Verbindungsmittels 3 bringbar sind. In Fig. 5b ist das Druckmittel 12 in einer Ausgangsposition bzw. gelösten Position gezeigt.

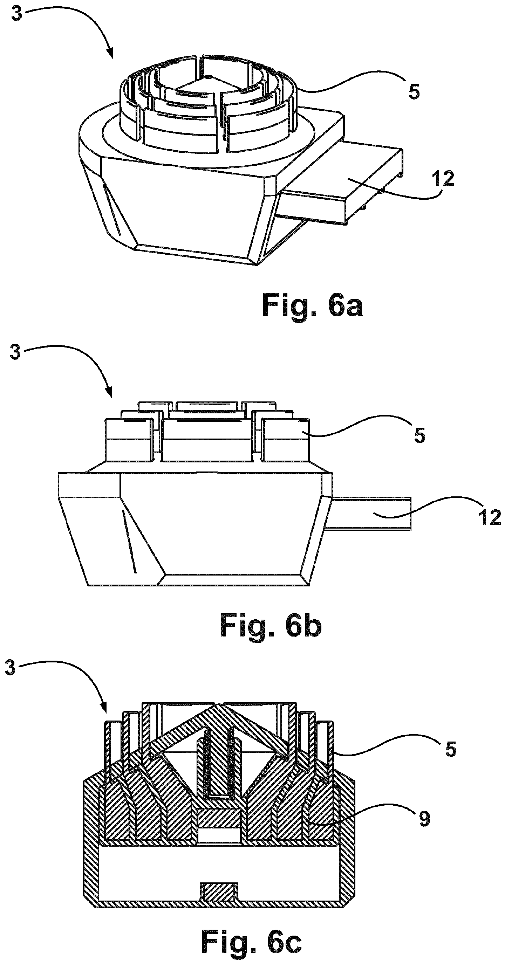

Eine zweite Position der Kontaktkörper 5 des männlichen Verbindungselementes 3 ist in Fig. 6a bis 6c gezeigt. Die Kontaktkörper 5 sind dabei aus dem in Verbindung tretenden Bereich 4 geschoben, um bei bzw. nach formschlüssigem Kontakt des männlichen Verbindungselementes 3 mit dem weiblichen Verbindungselement 2 eine leitende Verbindung herzustellen. Bevorzugt gleichzeitig mit Herstellung der leitenden Verbindung erfolgt eine kraftschlüssige Verbindung der Verbindungselemente 2, 3, um die Verbindung für eine Dauer einer Übertragung von z. B. Spannung oder Daten unterbrechungsfrei aufrechtzuerhalten. Dazu ist das Druckmittel 12 betätigt.

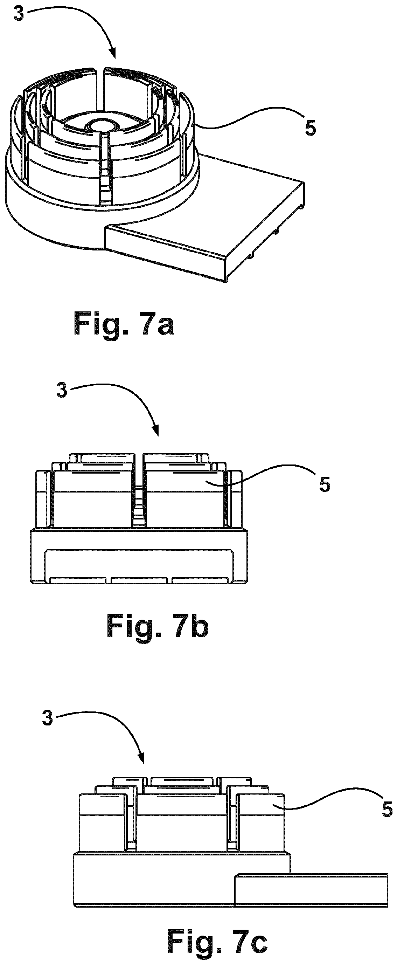

Fig. 7a bis 7c zeigen einen leitenden Teil eines männlichen Verbindungselementes 3. Es hat sich bewährt, dass jeder koaxiale Kontaktkörper 5, wie in Fig. 7a bis 7c gezeigt, in sechs Teilstücke bzw. Segmente unterteilt ist, um eine Nachgiebigkeit dieser und somit einen Übergangskontakt mit dem weiblichen Verbindungselement 2 zu erhöhen. Es kann jedoch auch eine andere Anzahl an Segmenten der Kontaktkörper 5 vorgesehen sein, beispielsweise drei. Günstig ist es jedoch, wenn der Kontaktkörper 5 in sechs oder mehr Segmente unterteilt ist. Weiter können die Kontaktkörper 5 einen oberen, leitenden Bereich und einen unteren isolierenden Bereich umfassen. Durch die koaxiale Ausbildung der Kontaktkörper 5 können diese dünn ausgebildet sein, beispielsweise dünner als 2 mm, insbesondere etwa 1 mm, und trotzdem eine große Querschnittsfläche aufweisen, da eine Umfangslänge des jeweiligen Kontaktkörpers 5 um zumindest eine Größenordnung größer ist als dessen jeweilige Dicke. Durch die große Querschnittsfläche ist bei einer Übertragung von elektrischer Energie eine große Ladeleistung erreichbar, was eine Ladedauer beim Laden eines Verbrauchers herabsetzen kann.

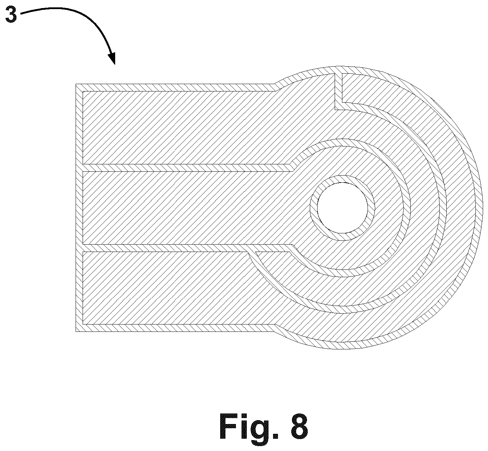

In Fig. 8 ist eine Untersicht eines Schnittes durch das männliche Verbindungselement 3 gezeigt. Dabei sind an die Kontaktkörper 5 anschließende Anschlüsse bzw. Leitungen und deren Verlauf gezeigt. Günstig ist es, wenn ein Übergang zwischen den hohlzylindrischen Kontaktkörpern 5 und den Anschlüssen mit einem möglichst großen durchgehenden Querschnitt ausgebildet ist.

In allen Fig. 1 bis 8 ist die Steckverbindung 1 so ausgebildet, dass mit dieser dreiphasige Wechselspannung übertragbar ist. Dabei entspricht jeweils eine der ringförmig angeordneten Kontaktkörper 5 bzw. Kontaktschichten 6 einer Phase. Die Steckverbindung 1 kann jedoch aus so ausgebildet sein, dass mit dieser fünfphasige Wechselspannung übertragbar ist. Dazu können im männlichen Verbindungselement 3 fünf Kontaktkörper 5 und im weiblichen Verbindungselement 2 fünf Kontaktschichten 6 angeordnet sein, wobei wiederum jeder Kontaktkörper 5 bzw. jede Kontaktschicht 6 eine Phase darstellt.

Eine erfindungsgemäße Steckverbindung 1 kann darüber hinaus auch für eine Übertragung von Gleichstrom ausgebildet sein. Dazu können zwei männliche Verbindungselemente 3 und zwei weibliche Verbindungselemente 2 vorgesehen sein, in welchen jeweils ein Kontaktkörper 5 bzw. eine Kontaktschicht 6 mit jeweils einer Phase angeordnet ist.

Ferner kann die Steckverbindung 1 auch so ausgebildet sein, dass mit dieser Daten oder Licht übertragbar sind.

Bei einem erfindungsgemäßen Verfahren zum Verbinden von insbesondere elektrischen Leitungen wird ein weibliches Verbindungselement 2 mit einem männlichen Verbindungselement 3 zusammengebracht, um schließlich eine leitende Verbindung herzustellen. Neben dem Verbinden von elektrischen Leitungen können mit dem erfindungsgemäßen Verfahren beispielsweise auch Leitungen zum Übertragen von Daten oder Licht miteinander verbunden werden.

In einem ersten Schritt wird hierzu ein in Verbindung tretender Bereich 4 bzw. ein Positionierkonus des männlichen Verbindungselementes 3 formschlüssig mit dem weiblichen Verbindungselement 2 zusammengeführt. Aufgrund des koaxial zulaufend bzw. konisch ausgebildeten in Verbindung tretenden Bereichs 4 des männlichen Verbindungselementes 3 rutscht dieser auch bei einem nicht optimalen Zusammentreffen mit dem weiblichen Verbindungselement 2 in dieses ab und wird somit in die gewünschte Position positioniert. Das weibliche Verbindungselement 2 ist dazu so ausgebildet, dass das männliche Verbindungselement 3 formschlüssig von diesem aufgenommen wird. Ein Ende 7 bzw. eine Spitze des Positionierkonus kann stumpf ausgebildet sein, sodass das Abrutschen des männlichen Verbindungselementes 3 erleichtert wird.

Die beiden Verbindungselemente 2, 3 werden beispielsweise händisch zusammengeführt. Alternativ können eines oder beide Verbindungselemente 2, 3 an einer Einrichtung angeordnet sein, welche diese zusammenführt. Um eine endgültige Position im weiblichen Verbindungselement 2 einzunehmen, kann es zweckmäßig sein, wenn das männliche Verbindungselement 3 um eine oder zwei Achsen ausgelenkt wird. Werden die Verbindungselemente 2, 3 händisch zusammengeführt, so wird eine solche Auslenkung von einer Hand durchgeführt. Liegt eine Einrichtung zum Zusammenführen der Verbindungselemente 2, 3 vor, so kann das männliche Verbindungselement 3 in einer oder mehreren Achsen auslenkbar an dieser angeordnet werden. Alternativ kann auch das weibliche Verbindungselement 2 ausgelenkt werden.

Nach der formschlüssigen Verbindung der beiden Verbindungselemente 2, 3 werden bei einem Vorhandensein von mehreren Kontaktkörpern 5, welche im männlichen Verbindungselement 3, innerhalb des Positionierkonus, angeordnet sind, diese in eine aus dem männlichen Verbindungselement 3 vorragende Position geschoben. Dafür sind im in Verbindung tretenden Bereich 4 Ausnehmungen 11 vorgesehen, durch welche die Kontaktkörper 5 geschoben werden bzw. hervortreten. Um eine leitende Verbindung zu erzeugen, werden diese mit zumindest einer Kontaktschicht 6 des weiblichen Verbindungselementes 2 in Verbindung gebracht. Wenn mehrere Kontaktschichten 6 vorhanden sind, werden diese in Aussparungen 10 des weiblichen Verbindungselementes 2 gelagert, wobei diese beabstandet von einem oberen Ende des weiblichen Verbindungselementes 2 enden. Zwischen den Kontaktkörpern 5 werden bevorzugt Isolierschichten 9 angeordnet, um Überschläge oder dergleichen zu verhindern.

Zweckmäßig ist es, wenn die kraftschlüssige Verbindung der Verbindungselemente 2, 3 mit einer Feder 8 hergestellt wird. Es kann dabei vorgesehen sein, dass die Feder 8 im männlichen Verbindungselement 3 an einer dem Positionierkonus gegenüberliegenden Seite des männlichen Verbindungselementes 3 angeordnet ist. Alternativ zur Feder 8 kann die kraftschlüssige Verbindung auch mit einem anderen Mittel hergestellt werden, beispielsweise mit einer Klemme oder einer Schraube. Eine Herstellung der kraftschlüssigen Verbindung bzw. eine Betätigung der Feder 8 kann durch ein Druckmittel 12 durchgeführt werden.

## Patentansprüche

1. Steckverbindung (1) zum Verbinden von insbesondere elektrischen Leitungen, umfassend zumindest ein weibliches Verbindungselement (2) und ein männliches Verbindungselement (3), wobei das weibliche Verbindungselement (2) das männliche Verbindungselement (3) formschlüssig aufnimmt und wobei ein in Verbindung tretender Bereich (4) des männlichen Verbindungselementes (3) koaxial zulaufend ausgebildet ist und zumindest einen verschiebbaren Kontaktkörper (5) umfasst, welcher in einer ersten Position innerhalb und in einer zweiten Position aus dem männlichen Verbindungselement (3) vorragend unter Herstellung eines Kontakts zwischen dem zumindest einen Kontaktkörper (5) und zumindest einer Kontaktschicht (6) des weiblichen Verbindungselementes (2) angeordnet ist,
**dadurch gekennzeichnet,**
**dass** die beiden Verbindungselemente (2, 3) bei formschlüssigem Kontakt und mit der Herstellung eines Kontakts zwischen der zumindest einen Kontaktschicht (6) und dem zumindest einen Kontaktkörper (5) kraftschlüssig lösbar verbindbar sind.

2. Steckverbindung (1) nach Anspruch 1, **dadurch gekennzeichnet, dass** bei formschlüssigem Kontakt der beiden Verbindungselemente (2, 3) der zumindest eine Kontaktkörper (5) des männlichen Verbindungselementes (3) unter Krafteinwirkung formschlüssig mit zumindest einer Kontaktschicht (6) des weiblichen Verbindungselementes (2) verbindbar ist, wobei ein Verbindungsbereich im weiblichen Verbindungselement (2) gelagert ist.

3. Steckverbindung (1) nach Anspruch 1 oder 2, **dadurch gekennzeichnet, dass** der Kontaktkörper (5) und die Kontaktschicht (6) der jeweiligen Verbindungselemente (2, 3) in einem Querschnitt durch diese im Wesentlichen rund sind.

4. Steckverbindung (1) nach Anspruch 3, **dadurch gekennzeichnet, dass** eine mehrphasige elektrische Verbindung vorliegt, wobei für jede Phase jeweils ein in einem Querschnitt durch die Verbindungselemente (2, 3) im Wesentlichen runder Kontaktkörper (5) je männlichem Verbindungselement (3) und eine im Wesentlichen runde Kontaktschicht (6) je weiblichem Verbindungselement (2) vorgesehen sind und wobei diese im Querschnitt durch die Verbindungselemente (2, 3) jeweils versetzt zueinander angeordnet sind.

5. Steckverbindung (1) nach einem der Ansprüche 1 bis 4, **dadurch gekennzeichnet, dass** die Verbindungselemente (2, 3) jeweils an einer zusammenführbaren Seite konusförmig ausgebildet sind, wobei der in Verbindung tretende Bereich (4) des männlichen Verbindungselementes (3) so ausgebildet ist, dass dieser bei einem Zusammenführen mit dem weiblichen Verbindungselement (2) selbsttätig in dieses einrastet.

6. Steckverbindung (1) nach Anspruch 5, **dadurch gekennzeichnet, dass** ein Ende (7) des in Verbindung tretenden Bereiches (4) des männlichen Verbindungselementes (3) stumpf ausgebildet ist.

7. Steckverbindung (1) nach Anspruch 5 oder 6, **dadurch gekennzeichnet, dass** das weibliche Verbindungselement (2) in einer mehreckigen, insbesondere in einer hexagonalen, Zelle angeordnet ist.

8. Steckverbindung (1) nach einem der Ansprüche 1 bis 7, **dadurch gekennzeichnet, dass** zur kraftschlüssigen Verbindung der Verbindungselemente (2, 3) eine Feder (8) vorgesehen ist.

9. Steckverbindung (1) nach einem der Ansprüche 1 bis 8, **dadurch gekennzeichnet, dass** in jedem Verbindungselement (2, 3) mehrere Kontaktkörper (5) und/oder Kontaktschichten (6) vorgesehen sind, welche jeweils abwechselnd mit Isolierschichten (9) angeordnet sind, wobei bei formschlüssigem Kontakt die Isolierschichten (9) beider Verbindungselemente (2, 3) aufeinander aufliegen.

10. Steckverbindung (1) nach einem der Ansprüche 1 bis 9, **dadurch gekennzeichnet, dass** in einem Querschnitt durch das weibliche Verbindungselement (2) in diesem zumindest eine im Wesentlichen runde Aussparung (10) vorgesehen ist, in welcher die zumindest eine Kontaktschicht (6) desselben angeordnet ist.

11. Steckverbindung (1) nach Anspruch 10, **dadurch gekennzeichnet, dass** Kontaktschichten (6) in einem Querschnitt durch das weibliche Verbindungselement (2) beabstandet von einem oberen Ende desselben angeordnet sind.

12. Steckverbindung (1) nach einem der Ansprüche 1 bis 11, **dadurch gekennzeichnet, dass** ein oder mehrere weibliche Verbindungselemente (2) an einem Elektrofahrzeug angeordnet sind.

13. Verwendung einer Steckverbindung (1) nach einem der Ansprüche 1 bis 12 zum Verbinden von Stromleitungen, insbesondere beim Laden eines Elektrofahrzeuges.

14. Verfahren zum Verbinden von insbesondere elektrischen Leitungen mit einer Steckverbindung (1), wobei zumindest ein männliches Verbindungselement (3) von zumindest einem weiblichen Verbindungselement (2) formschlüssig aufgenommen wird und die Verbindungselemente (2, 3) bei formschlüssigem Kontakt kraftschlüssig lösbar verbunden werden, wobei ein koaxial zulaufender Bereich (4) des männlichen Verbindungselementes (3) mit dem weiblichen Verbindungselement (2) verbunden wird, wonach zumindest ein Kontaktkörper (5) des männlichen Verbindungselementes (3) aus einer Position innerhalb desselben gelöst und in eine aus dem männlichen Verbindungselement (3) vorragende Position geschoben wird, um den Kontaktkörper (5) des männlichen Verbindungselementes (3) mit zumindest einer Kontaktachicht (6) des weibliches Verbindungselementes (2) zu verbinden.

15. Verfahren nach Anspruch 14, **dadurch gekennzeichnet, dass** bei einer formschlüssigen Verbindung des zumindest einen Kontaktkörpers (5) mit der zumindest einen Kontaktschicht (6) in einem Kontaktbereich innerhalb des weiblichen Verbindungselementes (2) die beiden Verbindungselemente (2, 3) insbesondere mit einer Feder (8) selbsttätig kraftschlüssig lösbar verbunden werden.

## Claims

1. A plug connection (1) for connecting electrical cables in particular, comprising at least one female connecting element (2) and a male connecting element (3), wherein the female connecting element (2) receives the male connecting element (3) in a positive fit, wherein a connecting portion (4) of the male connecting element (3) is designed with a coaxial taper and comprises at least one displaceable contact body (5), which is arranged in a first position within the male connecting element and in a second position protruding from the male connecting element (3), while producing a contact between the at least one contact body (5) and at least one contact layer (6) of the female connecting element (2), **characterized in that** the two connecting elements (2, 3) can be detachably connected in a force-fit manner in positive-locking contact and with the production of a contact between the at least one contact layer (6) and the at least one contact body (5).

2. The plug connection (1) according to claim 1, **characterized in that**, in the case of positive-locking contact of the two connecting elements (2, 3), the at least one contact body (5) of the male connecting element (3) can be positively connected under force with at least one contact layer (6) of the female connecting element (2), wherein a connecting portion is supported in the female connecting element (2).

3. The plug connection (1) according to claim 1 or 2, **characterized in that** the contact body (5) and the contact layer (6) of the respective connecting elements (2, 3) are essentially round in their cross-sectional view.

4. The plug connection (1) according to claim 3, **characterized in that** a multi-phase electrical connection is present, wherein the male connecting element (3) is provided with one contact body (5) per phase, which is essentially round as seen in a cross-section through the connecting elements (2, 3), and each female connecting element (2) is provided with one contact layer (6) per phase, which is essentially round, and wherein these respective connecting elements are arranged offset to each other as seen in a cross-section of the connecting elements (2, 3).

5. The plug connection (1) according to any one of claims 1 to 4, **characterized in that** the respective connecting elements (2, 3) are formed in a conical shape on a side on which they can be connected, wherein the connecting portion (4) of the male connecting element (3) is designed such that it automatically interlocks with the female connecting element (2) when it is inserted into the same.

6. The plug connection (1) according to claim 5, **characterized in that** one end (7) of the connecting portion (4) of the male connecting element (3) is configured to be blunt.

7. The plug connection (1) according to claims 5 or 6, **characterized in that** the female connecting element (2) is arranged in a polygonal, in particular a hexagonal cell.

8. The plug connection (1) according to any one of claims 1 to 7, **characterized in that** a spring (8) is provided for the force-fit connection of the connecting elements (2, 3).

9. The plug connection (1) according to any one of claims 1 to 8, **characterized in that** a plurality of contact bodies (5) and/or contact layers (6) are provided in each connecting element (2, 3) which are each arranged alternately with insulating layers (9), wherein in the case of positive contact, the insulating layers (9) of both connecting elements (2, 3) rest on one another.

10. The plug connection (1) according to any one of claims 1 to 9, **characterized in that** at least one recess (10) that is essentially round in a cross-section through the female connecting element (2) is provided therein, in which the at least one contact layer (6) of the same is arranged.

11. The plug connection (1) according to claim 10, **characterized in that** contact layers (6) are arranged in a cross-section through the female connecting element (2) at a distance from an upper end of the same.

12. The plug connection (1) according to any one of claims 1 to 11, **characterized in that** one or more female connecting elements (2) are arranged on an electric vehicle.

13. Use of a plug connection (1) according to any one of claims 1 to 12 for connecting electrical lines, in particular when charging an electric vehicle.

14. A method for connecting electrical cables in particular, having a plug connection (1), wherein at least one female connecting element (2) receives at least one male connecting element (3) in a positive fit, and wherein the connecting elements (2, 3) can be detachably connected in a force-fit manner while in positive-locking contact, wherein a coaxially tapered portion (4) of the male connecting element (3) is connected with the female connecting element (2), wherein at least one contact body (5) of the male connecting element (3) is released from a position within the same and is displaced into a position in which they protrude from the male connecting element (3) for connecting the contact body (5) of the male connecting element (3) with at least one contact layer (6) of the female connecting element (2).

15. The method according to claim 14, **characterized in that**, when the at least one contact body (5) is positively connected with the at least one contact layer (6) in a contact portion within the female connecting element (2), the two connecting elements (2, 3) are automatically connected, in particular by means of a spring (8), such that they can be detached in a force-fit manner.

## Revendications

1. Connecteur enfichable (1) pour connecter en particulier des lignes électriques, comprenant au moins un élément de connexion femelle (2) et un élément de connexion mâle (3), dans lequel l'élément de connexion femelle (2) reçoit par conjonction de forme l'élément de connexion mâle (3) et dans lequel une zone de connexion (4) de l'élément de connexion mâle (3) est configurée de manière effilée coaxialement et comprend au moins un corps de contact coulissant (5), qui est disposé en saillie dans une première position à l'intérieur et dans une seconde position hors de l'élément de connexion mâle (3) en établissant un contact entre le au moins un corps de contact (5) et au moins une couche de contact (6) de l'élément de connexion femelle (2), **caractérisé en ce que** les deux éléments de connexion (2, 3) en cas de contact par conjonction de forme et avec l'établissement d'un contact entre la au moins une couche de contact (6) et le au moins un corps de contact (5) peuvent être reliés de manière réversible par conjonction de force.

2. Connecteur enfichable (1) selon la revendication 1, **caractérisé en ce que** en cas de contact par conjonction de forme des deux éléments de connexion (2, 3) au moins un corps de contact 20 (5) de l'élément de connexion mâle (3) peut être connecté sous l'action de la force avec au moins une couche de contact (6) de l'élément de connexion femelle (2), dans lequel une zone de connexion est montée dans l'élément de connexion femelle (2).

3. Connecteur enfichable (1) selon la revendication 1 ou 2, **caractérisé en ce que** le corps de contact (5) et la couche de contact (6) des éléments de connexion respectifs (2, 3) sont substantiellement ronds en section transversale à travers ceux-ci.

4. Connecteur enfichable (1) selon la revendication 3, **caractérisé en ce qu'**il existe une connexion électrique multiphasée, dans lequel pour chaque phase respectivement un corps de contact (5) par élément de connexion mâle (3) substantiellement plus rond en une section transversale à travers les éléments de connexion (2, 3) et une couche de contact substantiellement ronde (6) par élément de connexion femelle (2) sont prévus et dans lequel ces derniers sont chacun décalés les uns des autres en coupe transversale à travers les éléments de connexion (2, 3) .

5. Connecteur enfichable (1) selon une des revendications 1 à 4, **caractérisé en ce que** les éléments de connexion (2, 3) sont chacun configurés de forme conique sur un côté fusionnable, dans lequel la région de connexion (4) de l'élément de connexion mâle (3) est conçue de telle sorte qu'en cas d'assemblage avec l'élément de connexion femelle (2) elle s'encliquète automatiquement avec cette dernière.

6. Connecteur enfichable (1) selon une des revendications 1 à 5, **caractérisé en ce qu'**une extrémité (7) de la zone de connexion (4) de l'élément de connexion mâle (3) est émoussée.

7. Connecteur enfichable (1) selon une des revendications 1 à 6, **caractérisé en ce que** l'élément de connexion femelle (2) est disposé dans une cellule polygonale, notamment hexagonale.

8. Connecteur enfichable (1) selon la revendication 7, **caractérisé en ce que** un ressort (8) est prévu pour la connexion par conjonction de force des éléments de connexion (2, 3).

9. Connecteur enfichable (1) selon une des revendications 1 à 8, **caractérisé en ce que** plusieurs corps de contact (5) et/ou couches de contact (6) sont prévus dans chaque élément de connexion (2, 3), qui sont disposés en alternance avec des couches isolantes (9), dans lequel les couches isolantes (9) des deux éléments de connexion (2, 3) reposant l'une sur l'autre en cas de contact par conjonction de forme.

10. Connecteur enfichable (1) selon une des revendications 1 à 9, **caractérisée en ce que** dans une section transversale à travers l'élément de connexion femelle (2), au moins un évidement essentiellement rond (10) est prévu, dans lequel la au moins une couche de contact (6) de celui-ci est disposée.

11. Connecteur enfichable (1) selon la revendication 10, **caractérisé en ce que** des couches de contact (6) sont disposées dans une section transversale à travers l'élément de connexion femelle (2) à distance d'une extrémité supérieure de celui-ci.

12. Connecteur enfichable (1) selon une des revendications 1 à 11, **caractérisée en ce qu'**un ou plusieurs éléments de connexion femelles (2) sont disposés sur un véhicule électrique.

13. Utilisation d'un connecteur enfichable (1) selon une des revendications 1 à 12 pour connecter des lignes électriques, notamment lors de la recharge d'un véhicule électrique.

14. Procédé pour connecter notamment des lignes électriques à un connecteur enfichable (1), dans lequel au moins un élément de connexion mâle (3) est reçu par au moins un élément de connexion femelle (2) par conjonction de forme et les éléments de connexion (2, 3) sont connectés par conjonction de force réversible en cas de contact par conjonction de forme, dans lequel une zone périphérique coaxiale (4) de l'élément de connexion mâle (3) est connecté à l'élément de connexion femelle (2), après quoi au moins un corps de contact (5) de l'élément de connexion mâle (3) est libéré d'une position à l'intérieur de celui-ci et poussé dans une position dépassant de l'élément de connexion mâle (3), afin de connecter le corps de contact (5) de l'élément de connexion mâle (3) à au moins une couche de contact (6) de l'élément de connexion femelle (2).

15. Procédé selon la revendication 14, **caractérisé en ce que** lors d'une connexion positive du au moins un corps de contact (5) avec la au moins une couche de contact (6) dans une zone de contact à l'intérieur de l'élément de connexion femelle (2), les deux éléments de liaison (2, 3), sont automatiquement connectés de manière réversible par conjonction de force, notamment par un ressort (8).
